# EUROPÄISCHE PATENTSCHRIFT

(11) **EP 2 719 499 B1**
(45) Veröffentlichungstag und Bekanntmachung des Hinweises auf die Patenterteilung: **17.12.2014**
(21) Anmeldenummer: 12007095.8
(22) Anmeldetag: 12.10.2012
(51) Int. Cl.: B23Q 1/54, B23Q 17/12, B23Q 11/00

(54) **Bearbeitungszentrum für die spanende Bearbeitung mit einer Unwucht-Messeinrichtung**
Machining centre with unbalance measuring device
Centre d'usinage avec dispositif de mesure du balourd

(43) Veröffentlichungstag der Anmeldung: 16.04.2014
(73) Patentinhaber: Maschinenfabrik Berthold Hermle AG, 78559 Gosheim (DE)
(72) Erfinder: Bernhard, Franz-Xaver, 78549 Spaichingen (DE); Hauff, Thomas, 78669 Wellendingen (DE)
(74) Vertreter: Hoefer & Partner

(56) Entgegenhaltungen:
- EP-A1- 2 329 913
- EP-A2- 1 621 285

## Beschreibung

Die Erfindung betrifft ein Bearbeitungszentrum für die spanende Bearbeitung, insbesondere ein multifunktionales Bearbeitungszentrum für die spanende Fräs-, Bohr- und Drehbearbeitung, mit einem stationären Maschinengestell, einem an oder im stationären Maschinegestell angeordneten stationären oder linear verfahrbaren Lagergestell, insbesondere einem stationären Lagergestell das integraler Bestandteil des Maschinengestells ist, einem an oder im Lagergestell unmittelbar ein - oder ein- oder beidseitig gelagerten, um eine horizontale Schwenkachse schwenkbaren Brückenträger, einem im Brückenträger gelagerten, antreibbaren um eine Drehachse drehbaren Werkstücktisch mit einer Aufspannfläche an der Tischoberfläche des Werkstücktisches zur Aufnahme und zum Befestigen von Werkstücken oder Werkstückpaletten für die spanende Bearbeitung, insbesondere für die Fräs-, Bohr- und Drehbearbeitung und mit mindestens einer Unwucht-Messeinrichtung für die Ermittlung einer Tischunwucht am drehbaren Werkstücktisch.

Ein derartiges Bearbeitungszentrum mit einem schwenk- und drehbaren Werkstücktisch (zweiachsig bewegbarer Werkstücktisch, zwei rotative Achsen im Werkstücktisch bzw. im Werkstück/Werkstückpalette) und einem Unwuchtsensor direkt im schwenkbaren Brückenträger ist der EP 2 329 913 B1 (siehe Abschnitt [0031] und Zeichnungen) zu entnehmen.

Ein weiteres Bearbeitungszentrum mit einem drehbaren und linear verfahrbaren Werkstücktisch (zweiachsig bewegbarer Werkstücktisch, eine rotative und eine linear Achse im Werkstücktisch bzw. im Werkstück/Werkstückpalette) und Unwuchtsensor direkt am Drehtisch zeigt die DE 602005004391 T2 (siehe Abschnitt [0004]).

Der Stand der Technik bei einem Bearbeitungszentrum für die spanende Bearbeitung mit einem schwenk- und drehbaren Werkstücktisch (zwei rotative Achsen im Werkstücktisch und somit im Werkstück bzw. in der Werkstückpalette) besteht darin, dass die Unwucht-Messeinrichtung für die Ermittlung der Tischunwucht im schwenkbaren Brückenträger, möglichst nahe am drehbaren Werkstücktisch und somit möglichst nahe an der Unwuchtquelle angebracht ist.

Diese Anordnung der Messeinrichtung für die Ermittlung der Tischunwucht hat den großen Nachteil, dass die Unwucht-Messeinrichtung nur für die Ermittlung der Tischunwucht in einer vorher fest definierten Schwenkposition des Brückenträgers in der Regel vor Prozessbeginn, d. h. vor Beginn der eigentlichen Bearbeitung, mit ausreichender Prozesssicherheit verwendet werden kann. Dabei wird vor Beginn der Werkstückbearbeitung die Tischunwucht immer in der 0°-Schwenkposition des Brückenträgers (Werkstücktischoberfläche steht waagrecht) ermittelt und dann durch ein oder mehrere Ausgleichsgewichte ausgeglichen bzw. kompensiert. Beim Messlauf für die Unwuchterkennung befindet sich die rotative Schwenkachse des schwenkbaren Brückenträgers immer im Stillstand und nur die rotative Drehachse des Werkstücktischs darf bzw. muss sich drehen.

Gemäß dem Stand der Technik ist die Unwucht-Messeinrichtung für die Ermittlung einer Tischunwucht an einem zweiachsig bewegbaren Werkstücktisch eines Bearbeitungszentrums immer in der unmittelbaren Nähe zur Unwuchtquelle angeordnet. Insbesondere die Anordnung der Unwucht-Messeinrichtung an oder in einem schwenkbaren Brückenträger, hat aber einen gravierenden Nachteil.

Wenn nämlich beim Messlauf zur Unwuchtmessung die Unwucht-Messeinrichtung auch noch gleichzeitig bewegt wird, kann es zu einer Signalverzerrung kommen. Insbesondere bei zweiachsig rotativ bewegbaren Werkstücktischen (schwenk- und drehbare Werkstücktische, auch Schwenk-Rundtische genannt) macht sich dieses negative Phänomen der Signalverzerrung bei gleichzeitiger Bewegung der beiden rotativen Achsen besonders stark bemerkbar.

Eine Unwuchterkennung bzw. eine Unwuchtüberwachung während des Bearbeitungsvorgangs, insbesondere bei einem Verschwenken des Brückenträgers, ist aber bei der Anordnung der Messeinrichtung nach dem Stand der Technik nur sehr eingeschränkt möglich. Die Ursache ist darin zu sehen, dass insbesondere beim Verschwenken des Brückträgers ein Fehlsignal erzeugt wird, welches durch die Querempfindlichkeit der Messeinrichtung verursacht wird, d.h. beim Verschwenken des Brückträgers bei der Bearbeitung, insbesondere bei der Drehbearbeitung - der ausgewuchtete Werkstücktisch dreht mit einer sehr hohen Drehzahl und wird gleichzeitig (simultan) verschwenkt, um so eine beliebig geformte Bearbeitungskontur durch eine Drehbearbeitung zu erzeugen - werden Schwingungswerte ermittelt, die von der Messeinrichtung teilweise als unzulässige Unwucht interpretiert werden, obwohl der Werkstücktisch ordnungsgemäß ausgewuchtet ist. Aus diesem Grund muss die Messeinrichtung während der Bearbeitung, insbesondere bei der Drehbearbeitung, aus prozesstechnischen Gründen ausgeblendet werden. Dieses Ausblenden der Messeinrichtung ist aus sicherheitstechnischer Sicht sehr unvorteilhaft. Denn während des Bearbeitungsvorganges (z.B. Fräsen, Bohren und Drehen) kann sich die Unwucht des Werkstücktisches durchaus unzulässig groß verändern. Zum einen kann durch eine große außermittige Zerspanung am aufgespannten Werkstück eine unzulässige Unwucht am Werkstücktisch entstehen, zum anderen kann durch ein Wegschleudern von diversen Werkstückspannmittel aufgrund einer fehlerhaften manuellen Befestigung (z. B. die Befestigungsschrauben des Werkstückspannmittels werden nicht ordnungsgemäß angezogen und durch die Fliehkraftwirkung wird das Spannmittel weggeschleudert) eine unzulässige Unwucht am Werkstücktisch entstehen. In beiden Fällen ist es dringend geboten, diesen nicht ordnungsgemäßen Zustand zeitnah, d. h. in wenigen Millisekunden, zu erkennen und dann den Werkstücktisch unverzüglich stillzusetzen, d. h. einen Not-Halt für die Drehbewegung des Werkstücktisches auszulösen. Ansonsten sind Maschinen- und Personenschäden nicht auszuschließen. Aufgrund einer unzulässig großen Unwucht am Werkstücktisch können sehr große Fliehkräfte im zweistelligen Kilonewton-Bereich entstehen, die dann durchaus in der Lage sind, das gesamte Werkstück vom Werkstücktisch herabzuschleudern. Ein gesamtes Werkstück kann die Umhausung eines Bearbeitungszentrums in der Regel nicht mehr sicher zurückhalten. Somit hat die Unwuchtüberwachung während der Bearbeitung einen großen sicherheitstechnischen Stellenwert. Ausgehend von diesem Stand der Technik liegt der vorliegenden Erfindung die Aufgabe zugrunde, eine Anordnung für die Unwucht-Messeinrichtung zu schaffen, mit der eine prozesssichere Unwuchterkennung bzw. eine Unwuchtüberwachung während des Bearbeitungsvorgangs, insbesondere beim gleichzeitigen (simultanen) Verschwenken und Drehen des Werkstücktisches möglich ist.

Die erfindungsgemäße Aufgabe wird bei einem Bearbeitungszentrum für die spanende Bearbeitung, insbesondere ein multifunktionales Bearbeitungszentrum für die spanende Fräs-, Bohr- und Drehbearbeitung, mit einem stationären Maschinengestell, einem an oder im stationären Maschinegestell angeordneten stationären oder linear verfahrbaren Lagergestell, insbesondere einem stationären Lagergestell das integraler Bestandteil des Maschinengestells ist, einem an oder im Lagergestell unmittelbar ein - oder ein- oder beidseitig gelagerten, um eine horizontale Schwenkachse schwenkbaren Brückenträger, einem im Brückenträger gelagerten, antreibbaren um eine Drehachse drehbaren Werkstücktisch mit einer Aufspannfläche an der Tischoberfläche des Werkstücktisches zur Aufnahme und zum Befestigen von Werkstücken oder Werkstückpaletten für die spanende Bearbeitung, insbesondere für die Fräs-, Bohr- und Drehbearbeitung und mit mindestens einer Unwucht-Messeinrichtung für die Ermittlung einer Tischunwucht am drehbaren Werkstücktisch, dadurch gelöst, dass die Unwucht-Messeinrichtung für die Unwuchterkennung des drehbaren Werkstücktisches im oder am stationären oder linear verfahrbaren Lagergestell des Bearbeitungszentrums angeordnet ist.

Entgegen der üblichen Fachmeinung bringt die erfindungsgemäße Verlagerung der Unwucht-Messeinrichtung, weg von dem dreh- und schwenkbaren und Unwucht erzeugenden Bauteil (Werkstücktisch) in ein nicht schwenkbares Bauteil (Lagergestell) erhebliche Vorteile hinsichtlich der Störfestigkeit gegenüber Fehlsignalen mit sich. Zwar kann eine Unwucht-Messeinrichtung, die relativ weit weg von der Unwuchtquelle angeordnet ist - Steifigkeitskette bis zur Messeinrichtung für die Unwuchterkennung relativ lang - nur relativ schwache Schwingungsamplituden der Unwucht erkennen, dafür sind diese Schwingungsamplituden aber sehr stabil und werden durch überlagerte Vorschubbewegungen des Bearbeitungszentrums, insbesondere der Schwenkbewegung des Brückenträgers, nur unwesentlich gestört, so dass mit dieser Maßnahme erstmalig eine prozesssichere Unwuchterkennung bzw. eine Unwuchtüberwachung während der Bearbeitung bei gleichzeitigem (simultanem) Drehen und Schwenken des Werkstücktisches bei einem Bearbeitungszentrum mit einem schwenk- und drehbaren Werkstücktisch möglich wird.

Erst infolge der beschriebenen Erfindung kann der Nachteil der Signalverzerrung behoben werden, so dass auch eine Unwuchterkennung bzw. Unwuchtüberwachung während der Bearbeitung, wenn sich beide Achsen des Werkstücktisches gleichzeitig bewegen, möglich ist.

Vorteilhafte Weiterbildungen ergeben sich aus den Unteransprüchen.

Bevorzugt wird die erfindungsgemäße Unwucht-Messeinrichtung bei einem Bearbeitungszentrum verwendet, bei dem eine werkzeugtragende Baugruppe vorgesehen ist, die aus einem in einer horizontalen Raumrichtung linear verfahrbaren Längsschlitten, einem in einer horizontalen Raumrichtung linear verfahrbaren Querschlitten und einem in einer vertikalen Raumrichtung linear verfahrbaren Vertikalschlitten besteht, bei dem eine für die Aufnahme der Bearbeitungswerkzeuge zum Fräsen, Bohren und Drehen vorgesehene Werkzeugspindel im linear verfahrbaren Vertikalschlitten angeordnet ist und bei dem der Längsschlitten unmittelbar auf dem Maschinengestell geführt ist.

Vorteilhafterweise ist das Bearbeitungszentrum derart ausgebildet, dass das stationäre Maschinengestell für die Aufnahme oder Integration des Lagergestells U-förmig ausgestaltet ist und zwei Seitenwandungen besitzt, die einen Arbeitsraum der Werkzeugspindel seitlich begrenzen, dass in oder an den Seitenwandungen das Lagergestell für den Brückenträger angebracht ist, dass der Brückenträger innerhalb der Seitenwandungen im Arbeitsraum der Werkzeugspindel angeordnet ist und dass die Unwucht-Messeinrichtung in einer der beiden Seitenwandungen angeordnet ist.

Bevorzugt ist die Unwucht-Messeinrichtung im unmittelbaren angrenzenden Bereich des Lagergestells angeordnet ist.

Die Unwucht-Messeinrichtung enthält vorzugsweise einen Beschleunigungs- oder einen Geschwindigkeitssensor.

Vorteilhafterweise kann der Geschwindigkeitssensor nach einem elektro-dynamischen Messprinzip arbeiten, und der Beschleunigungssensors kann bevorzugt als piezoelektrischer Beschleunigungssensor oder als kapazitiver Beschleunigungssensor ausgebildet sein.

Weitere Einzelheiten, Merkmale und Vorteile der Erfindung ergeben sich aus der nachfolgenden Beschreibung anhand der Zeichnungen. Es zeigt:
- Figur 1: eine perspektivische Ansicht eines erfindungsgemäßen Bearbeitungszentrums.
- Figur 2: eine perspektivische Ansicht eines weiteren erfindungsgemäßen Bearbeitungszentrums.

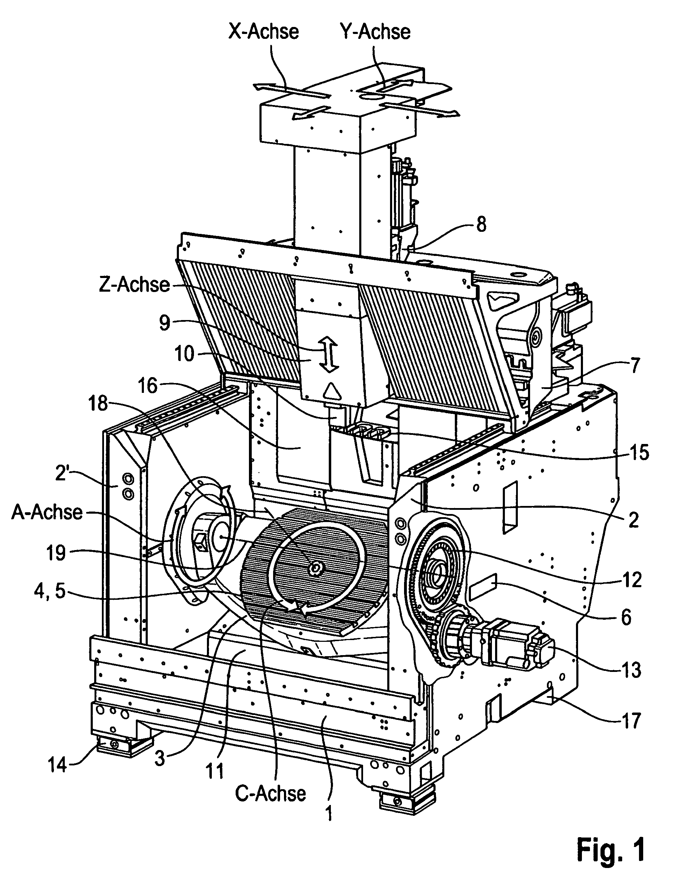

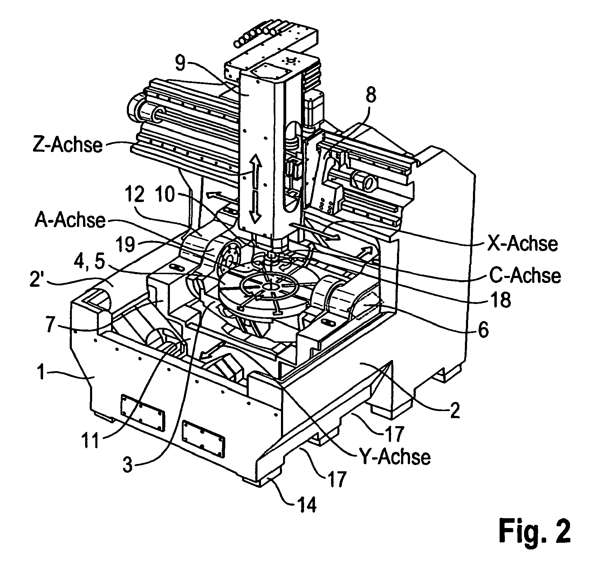

Die Bearbeitungszentren in Figur 1 und Figur 2 unterscheiden sich im Wesentlichen nur dadurch, dass in Figur 1 das Lagergestell für die Aufnahme des schwenkbaren Brückenträgers als stationäres Lagergestell ausgebildet und in den beiden Seitenwandungen des stationären Maschinengestells integriert ist und dass in Figur 2 das Lagergestell für die Aufnahme des schwenkbaren Brückenträgers als linear verfahrbares Lagergestell ausgebildet und an den beiden Seitenwandungen des stationären Maschinengestells angeordnet ist.

Wegen diesen geringfügigen Unterschieden bezieht sich die nachfolgende Beschreibung nur auf die bevorzugte Ausführungsform nach Figur 1.

In der Figur 1 ist ein Bearbeitungszentrum für die spanende Bearbeitung gezeigt.

Das Bearbeitungszentrum weist ein U-förmiges stationäres Maschinengestell 1 mit einer rechten und einer linken Seitenwandung 2, 2' auf. An dem Maschinengestell 1 ist ein Brückenträger 3 gelagert, der einen Werkstücktisch 4 mit einer Aufspannfläche 5 für ein Werkstück lagert. Der Werkstücktisch 4 ist als Drehtisch ausgebildet und um eine Drehachse 18 (C-Achse) drehbar.

An zumindest einer der Seitenwandungen 2, 2' des Maschinengestells 1 - im Ausführungsbeispiel gemäß Figur 1 an der rechten Seitenwandung 2 - ist im unmittelbaren angrenzenden Bereich an dem Lagergestell 12 für den Werkstücktisch 4 eine Unwucht-Messeinrichtung 6 angeordnet, die auf der der Fliehkraft zugewandten Seite liegt.

Die Unwucht-Messeinrichtung 6 weist einen Beschleunigungs- oder einen Geschwindigkeitssensor auf. Der Geschwindigkeitssensor arbeitet nach einem elektro-dynamischen Messprinzip, während der Beschleunigungssensor als piezoelektrischer Beschleunigungssensor oder als kapazitiver Beschleunigungssensor ausgebildet sein kann.

Auf den Seitenwandungen 2, 2' ist weiterhin ein Längsschlitten 7 geführt, der einen Querschlitten 8 und einen Vertikalschlitten 9 trägt. An dem Vertikalschlitten 9 ist eine Werkzeugspindel 10 gelagert, welche in einen Arbeitsraum 11 hineinragt, in welchem sich das Werkstück befindet. Infolge dieser Lagerung kann die Werkzeugspindel 10 in Richtung der x-Achse, der y-Achse und der z-Achse verfahren werden.

Der Brückenträger 3 ist über in den Seitenwandungen 2, 2' angeordnetes Lagergestell 12 verschwenkbar. Dazu ist ein Antriebsmotor 13 vorgesehen, welcher in einer der Seitenwandungen 2 angeordnet ist und den Brückenträger 3 um eine horizontale Achse 19 (A-Achse) verschwenken kann.

Der zwischen den Seitenwandungen 2, 2' gebildete Arbeitsraum 11 ist nach hinten von einer sich zwischen den Seitenwandungen 2, 2' erstreckenden Querwandung 16 begrenzt. In dieser Querwandung 16 ist eine Öffnung vorgesehen, durch welche eine Werkzeugspindel 10 in ein hinter dem Arbeitsraum 11 liegendes Werkzeugmagazin 15 einfahren kann, um im Pick-Up-Verfahren einen Werkzeugwechsel vornehmen zu können.

Das gesamte stationäre Maschinengestell 1 ist auf höhenverstellbaren Maschinenfüßen 14 derart gelagert, dass sich unterhalb des Maschinengestells 1 ein Freiraum 17 ergibt, in welchen beispielsweise ein mobiler Späneförderer eingeschoben werden kann.

### Bezugszeichenliste

- 1: Stationäres Maschinengestell
- 2: Seitenwandung
- 2': Seitenwandung
- 3: Brückenträger
- 4: Werkstücktisch
- 5: Aufspannfläche
- 6: Unwucht-Messeinrichtung
- 7: Längsschlitten
- 8: Querschlitten
- 9: Vertikalschlitten
- 10: Werkzeugspindel
- 11: Arbeitsraum
- 12: Lagergestell für den Brückenträger
- 13: Antriebsmotor für den Brückenträger
- 14: Maschinenfüße
- 15: Werkzeugmagazin
- 16: Querwandung
- 17: Freiraum
- 18: Drehachse (C-Achse)
- 19: horizontale Schwenkachse (A-Achse)

## Patentansprüche

1. Bearbeitungszentrum für die spanende Bearbeitung, insbesondere ein multifunktionales Bearbeitungszentrum für die spanende Fräs-, Bohr und Drehbearbeitung, mit einem stationären Maschinengestell (1), einem an oder im stationären Maschinengestell (1) angeordneten stationären oder linear verfahrbaren Lagergestell (12), insbesondere einem stationären Lagergestell (12) das integraler Bestandteil des Maschinengestells (1) ist, einem an oder im stationären Maschinengestell (1) unmittelbar ein- oder beidseitig gelagerten, um eine horizontale Schwenkachse (19) schwenkbaren Brückenträger (3), einem im Brückenträger (3) gelagerten, antreibbaren um eine Drehachse (18) drehbaren Werkstücktisch (4) mit einer Aufspannfläche (5) an der Tischoberfläche des Werkstücktisches (4) zur Aufnahme und zum Befestigen von Werkstücken oder Werkstückpaletten für die spanende Bearbeitung, insbesondere für die Fräs-, Bohr- und Drehbearbeitung und mit mindestens einer Unwucht-Messeinrichtung (6) für die Ermittlung einer Tischunwucht am drehbaren Werkstücktisch (4), **dadurch gekennzeichnet, dass** die Unwucht-Messeinrichtung (6) für die Unwuchterkennung des drehbaren Werkstücktisches (4) im oder am stationären oder linear verfahrbaren Lagergestell (12) des Bearbeitungszentrums angeordnet ist.

2. Bearbeitungszentrum nach einem der vorhergehenden Ansprüche, **dadurch gekennzeichnet, dass** eine werkzeugtragende Baugruppe vorgesehen ist, die aus einem in einer horizontalen Raumrichtung linear verfahrbaren Längsschlitten (7), einem in einer horizontalen Raumrichtung linear verfahrbaren Querschlitten (8) und einem in einer vertikalen Raumrichtung linear verfahrbaren Vertikalschlitten (9) besteht, dass eine für die Aufnahme der Bearbeitungswerkzeuge zum Fräsen, Bohren und Drehen vorgesehene Werkzeugspindel (10) im linear verfahrbaren Vertikalschlitten (9) angeordnet ist und dass der Längsschlitten (7) unmittelbar auf dem Maschinengestell (1) geführt ist.

3. Bearbeitungszentrum nach einem der vorhergehenden Ansprüche, **dadurch gekennzeichnet, dass** das stationäre Maschinengestell (1) für die Aufnahme oder Integration des Lagergestells (12) U-förmig ausgestaltet ist und zwei Seitenwandungen (2, 2') besitzt, die einen Arbeitsraum (11) der Werkzeugspindel (10) seitlich begrenzen, dass in oder an den Seitenwandungen (2, 2') das Lagergestell (12) für den Brückenträger (3) angebracht ist, dass der Brückenträger (3) innerhalb der Seitenwandungen (2, 2') im Arbeitsraum (11) der Werkzeugspindel (10) angeordnet ist und dass die Unwucht-Messeinrichtung (6) in einer der beiden Seitenwandungen (2) angeordnet ist.

4. Bearbeitungszentrum nach Anspruch 3, **dadurch gekennzeichnet, dass** die Unwucht-Messeinrichtung (6) im unmittelbaren angrenzenden Bereich des Lagergestells (12) angeordnet ist.

5. Bearbeitungszentrum nach einen der vorhergehenden Ansprüche, **dadurch gekennzeichnet, dass** die Unwucht-Messeinrichtung (6) einen Beschleunigungs- oder einen Geschwindigkeitssensor enthält.

6. Bearbeitungszentrum nach Anspruch 5, **dadurch gekennzeichnet, dass** der Geschwindigkeitssensor nach einem elektro-dynamischen Messprinzip arbeitet.

7. Bearbeitungszentrum nach Anspruch 5 oder 6, **dadurch gekennzeichnet, dass** der Beschleunigungssensor als piezoelektrischer Beschleunigungssensor ausgebildet ist.

8. Bearbeitungszentrum nach Anspruch 5 oder 6, **dadurch gekennzeichnet, dass** der Beschleunigungssensor als kapazitiver Beschleunigungssensor ausgebildet ist.

## Claims

1. A machining center for machining, particularly a multifunctional machining center for machining by milling, drilling and turning, comprising a stationary machine frame (1), a stationary or linearly movable storage rack (12) arranged on or in the stationary machine frame (1), particularly a stationary storage rack (12) which is an integral part of the machine frame (1), a bridge girder (3) which is supported on or in the stationary machine frame (1) directly on one or both sides and which is pivotable about a horizontal pivot axis (19), a workpiece table (4) which is supported in the bridge girder (3) and which is drivable and rotatable about a rotation axis (18), with a mounting area (5) on the table surface of the workpiece table (4) for receiving and fastening workpieces or workpiece pallets for machining, particularly for machining by milling, drilling and turning, and at least one unbalance measuring device (6) for determining a table unbalance on the rotatable workpiece table (4), **characterized in that** the unbalance measuring device (6) for detecting unbalance of the rotatable workpiece table (4) is arranged in or on the stationary or linearly movable storage rack (12) of the machining center.

2. The machining center according to any one of the preceding claims, **characterized in that** a tool-carrying assembly is provided, which consists of a longitudinal slide (7) which is linearly movable in a horizontal spatial direction, a cross slide (8) which is linearly movable in a horizontal spatial direction, and a vertical slide (9) which is linearly movable in a vertical spatial direction, that a tool spindle (10) which is provided for receiving the machining tools for milling, drilling and turning is arranged in the linearly movable vertical slide (9), and that the longitudinal slide (7) is directly guided on the machine frame (1).

3. The machining center according to any one of the preceding claims, **characterized in that** the stationary machine frame (1) is configured to be U-shaped for receiving or integrating the storage rack (12) and has two side walls (2, 2') that laterally define a work chamber (11) of the tool spindle (10), that the storage rack (12) for the bridge girder (3) is mounted in or on the side walls (2, 2'), that the bridge girder (3) is arranged within the side walls (2, 2') in the work chamber (11) of the tool spindle (10), and that the unbalance measuring device (6) is arranged in one of the two side walls (2).

4. The machining center according to claim 3, **characterized in that** the unbalance measuring device (6) is arranged in the direct adjoining region of the storage rack (12).

5. The machining center according to any one of the preceding claims, **characterized in that** the unbalance measuring device (6) includes an acceleration sensor or a speed sensor.

6. The machining center according to claim 5, **characterized in that** the speed sensor operates according to an electro-dynamic measuring principle.

7. The machining center according to claim 5 or 6, **characterized in that** the acceleration sensor is designed as a piezoelectric acceleration sensor.

8. The machining center according to claim 5 or 6, **characterized in that** the acceleration sensor is designed as a capacitive acceleration sensor.

## Revendications

1. Centre d'usinage pour l'usinage par enlèvement de copeaux, en particulier centre d'usinage multifonction pour l'usinage par enlèvement de copeaux par fraisage, perçage et tournage, comprenant un bâti de machine (1) stationnaire, un bâti de palier (12) pouvant être déplacé de manière linéaire ou stationnaire disposé au niveau du bâti de machine (1) stationnaire ou dans ce dernier, en particulier un bâti de palier (12) stationnaire, qui fait partie intégrante du bâti de machine (1), une poutre de pont (3) montée directement sur un côté ou sur deux côtés au niveau du bâti de machine (1) stationnaire ou dans ce dernier, pouvant pivoter autour d'un axe de pivotement (19), un plateau porte-pièces (4) monté dans la poutre de pont (3), pouvant être entraîné en rotation autour d'un axe de rotation (18) et pourvu d'une surface de serrage (5) au niveau de la surface de plateau du plateau porte-pièces (4) servant à recevoir et à fixer des pièces à usiner ou des palettes de pièces à usiner pour l'usinage par enlèvement de copeaux, en particulier pour l'usinage par fraisage, perçage et tournage, et comprenant au moins un dispositif de mesure de balourd (6) aux fins de la détermination d'un balourd de plateau au niveau du plateau porte-pièces (4) rotatif, **caractérisé en ce que** le dispositif de mesure de balourd (6) servant à identifier un balourd du plateau porte-pièces (4) rotatif est disposé dans ou au niveau du bâti de palier (12), stationnaire ou pouvant être déplacé de manière linéaire, du centre d'usinage.

2. Centre d'usinage selon l'une quelconque des revendications précédentes, **caractérisé en ce qu'**est prévu un ensemble porte-outils, qui est constitué d'un chariot longitudinal (7) pouvant être déplacé de manière linéaire dans une direction spatiale horizontale, d'un chariot transversal (8) pouvant être déplacé de manière linéaire dans une direction spatiale horizontale et d'un chariot vertical (9) pouvant être déplacé de manière linéaire dans une direction spatiale verticale, **en ce qu'**une broche porte-outils (10) prévue pour recevoir les outils d'usinage servant au fraisage, perçage et tournage est disposée dans le chariot vertical (9) pouvant être déplacé de manière linéaire, et **en ce que** le chariot longitudinal (7) est guidé directement sur le bâti de machine (1).

3. Centre d'usinage selon l'une quelconque des revendications précédentes, **caractérisé en ce que** le bâti de machine (1) stationnaire servant à recevoir ou à intégrer le bâti de palier (12) est configuré de manière à présenter une forme de U et comporte deux parois latérales (2, 2'), qui délimitent un espace de travail (11) de la broche porte-outils (10), **en ce que** le bâti de palier (12) pour la poutre de pont (3) est installé dans ou au niveau des parois latérales (2, 2'), **en ce que** la poutre de pont (3) est disposée à l'intérieur des parois latérales (2, 2') dans l'espace de travail (11) de la broche porte-outils (10), et **en ce que** le dispositif de mesure de balourd (6) est disposé dans l'une des deux parois latérales (2).

4. Centre d'usinage selon la revendication 3, **caractérisé en ce que** le dispositif de mesure de balourd (6) est disposé dans la zone immédiatement adjacente du bâti de palier (12).

5. Centre d'usinage selon l'une quelconque des revendications précédentes, **caractérisé en ce que** le dispositif de mesure de balourd (6) contient un capteur d'accélération ou un capteur de vitesse.

6. Centre d'usinage selon la revendication 5, **caractérisé en ce que** le capteur de vitesse fonctionne selon un principe de mesure électrodynamique.

7. Centre d'usinage selon la revendication 5 ou 6, **caractérisé en ce que** le capteur d'accélération est réalisé sous la forme d'un capteur d'accélération piézoélectrique.

8. Centre d'usinage selon la revendication 5 ou 6, **caractérisé en ce que** le capteur d'accélération est réalisé sous la forme d'un capteur d'accélération capacitif.
